Europäisches Patentamt

European Patent Office

Office européen des brevets

(11) Veröffentlichungsnummer: **0 496 273 A1**

# EUROPÄISCHE PATENTANMELDUNG

(21) Anmeldenummer: **92100633.4**

(51) Int. Cl.5: **C03C 3/06**, C01B 33/04

(22) Anmeldetag: **16.01.92**

(30) Priorität: **22.01.91 DE 4101687**

(43) Veröffentlichungstag der Anmeldung:
**29.07.92 Patentblatt 92/31**

(84) Benannte Vertragsstaaten:
**AT BE CH DE DK ES FR GB GR IT LI LU MC
NL PT SE**

(71) Anmelder: **DR. BASTIAN GmbH SILICA
Oberer Grifflenberg 155
W-5600 Wuppertal(DE)**

(72) Erfinder: **Bastian, Volker, Dr.
Oberer Grifflenberg 155
W-5600 Wuppertal 1(DE)**

(74) Vertreter: **Heiber, Margarita, Dr.
Futterstrasse 33
W-5600 Wuppertal 2(DE)**

(54) Verfahren zur Herstellung von hochreinem Ouarzglas.

(57) Es wird ein umweltfreundliches und wirtschaftliches Verfahren zur Herstellung von hochreinem Quarzglas durch Verbrennung eines Silan/Sauerstoff-Gemisches bereitgestellt, bei dem eine eutektische Schmelze aus Kaliumchlorid und Lithiumchlorid elektrolysiert wird, wobei an der Kathode Wasserstoff eingeleitet wird, das dabei an der Kathode gebildete Lithiumhydrid in der Schmelze mit Siliziumtetrachlorid umgesetzt, das dabei entstehende Silan abgezogen und unmittelbar anschließend mit Sauerstoff vermischt und verbrannt wird, wobei das an der Anode gebildete Chlorgas abgezogen und unmittelbar anschließend mit elementarem Silizium zu Siliziumtetrachlorid umgesetzt wird, das zur Umsetzung mit dem Lithiumhydrid verbraucht wird.

FIGUR 2

Die Erfindung betrifft ein Verfahren zur Herstellung von hochreinem Quarzglas durch Verbrennung eines Silan/Sauerstoff-Gemisches.

Synthetisches Quarzglas wird wegen seiner hohen Reinheit für optische Zwecke, beispielsweise im UV-Spektralbereich bis etwa 180 nm sowie zur Herstellung von optischen Fasern für verschiedene Anwendungszwecke eingesetzt. Üblicherweise wird synthetisches Quarzglas nach US-A- 2,272,342 (10.02.1942) hergestellt. Bei diesem Verfahren wird gasförmiges Siliziumtetrachlorid mittels eines Spezialbrenners mit einer Propan-Sauerstoff-Flamme hydrolysiert und zu einem "Posten" aus synthetischem Quarzglas ($SiO_2$) erschmolzen. Derartige Posten haben je nach dem Produktionsverfahren ein Gewicht bis zu 70 kg. Nach der Herstellung werden sie mit Glasbearbeitungsmaschinen auf die erforderlichen Abmessungen für den jeweiligen Anwendungsfall geschnitten oder gebohrt. Dieses Verfahren weist neben einer geringen Wirtschaftlichkeit auch den Nachteil auf, daß Siliziumtetrachlorid und Propan sowie große Mengen an verdichtetem Sauerstoff bereitgestellt werden müssen, Chemikalien, die der Gefahrstoffverordnung unterliegen, und für deren Lagerung besondere Vorsichtsmaßnahmen zu treffen sind. Als Abfallprodukte entsteht neben Kohlendioxid und Wasser toxisches Chlorwasserstoffgas.

In der DE-A-38 35 208 wird zwar die Herstellung von synthetischem Quarzglas durch Verbrennung von hochgereinigtem Silan ($SiH_4$) beschrieben, jedoch hat dieses Verfahren bislang in der Praxis keine Anwendung gefunden, da es unwirtschaftlich ist. Es mußte ausgehend von hochgereinigtem Silan durchgeführt werden, das von der Industrie geliefert wird. Hierbei handelt es sich um ein kostspieliges und gefährliches Material, da es selbstentzündlich ist.

Aufgabe der Erfindung war daher die Bereitstellung eines Verfahrens zur Herstellung von hochreinem Quarzglas, das umweltfreundlich und abfallvermeidend, ohne die Notwendigkeit des Einsatzes bzw. der Lagerung gefährlicher und toxischer Zwischenprodukte durchgeführt werden kann.

Es hat sich gezeigt, daß diese Aufgabe gelöst werden kann durch ein Verfahren zur Herstellung von hochreinem Quarzglas durch Verbrennung eines Silan/Sauerstoff-Gemisches, das dadurch gekennzeichnet ist, daß

a) eine eutektische Schmelze aus Kaliumchlorid und Lithiumchlorid einer Elektrolyse unterzogen wird, wobei an der Kathode Wasserstoff eingeleitet wird,

b) das dabei an der Kathode gebildete Lithiumhydrid in der Schmelze mit Siliziumtetrachlorid umgesetzt wird,

c) das dabei entstehende Silan abgezogen und unmittelbar anschließend mit elementarem Silizium zu Siliziumtetrachlorid umgesetzt wird,

d) das in der Stufe a) an der Anode gebildete Chlorgas abgezogen und unmittelbar anschließend mit elementarem Silizium zu Siliziumtetrachlorid umgesetzt wird, das in die Stufe b) zur Umsetzung mit dem Lithiumhydrid eingeführt wird.

Beim erfindungsgemäßen Verfahren handelt es sich um ein kombiniertes Verfahren, bei dem als Ausgangsstoff keine gefährlichen Materialien eingesetzt werden. Als Ausgangsmaterialien kommen nur elementares Silizium und Wasser in Frage, insbesondere dann, wenn gemäß einer bevorzugten Ausführungsform des erfindungsgemäßen Verfahrens der zur Umsetzung an der Kathode benötigte Wasserstoff direkt durch Elektrolyse von Wasser erzeugt und der dabei entstehende Sauerstoff als Teil des zur Verbrennung in der Stufe c) benötigten Sauerstoffs verwendet wird.

Durch die erfindungsgemäße Verfahrensweise wird es möglich, Chlorgas, Siliziumtetrachlorid und gegebenenfalls Wasserstoff sowie Sauerstoff nur in solchen Mengen zu erzeugen, die zur unmittelbaren Weiterverarbeitung benötigt werden. Die Notwendigkeit der Anlieferung, des Transports, sowie der Lagerung von gefährlichen oder umweltschädlichen Rohstoffen, wie Siliziumtetrachlorid oder hochgereinigtem Silan entfällt.

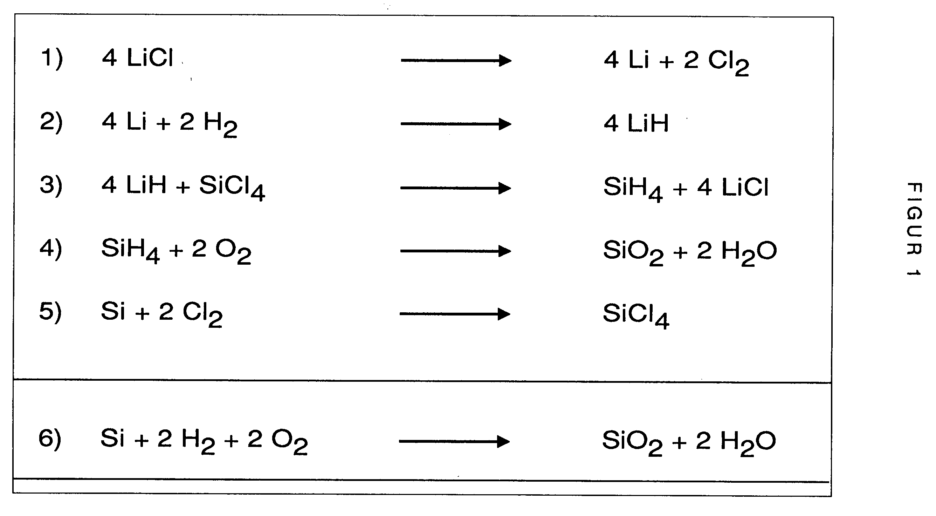

Der Chemismus des erfindungsgemäßen Verfahrens ist in der beigefügten **Figur 1** dargestellt.

Bei der Durchführung des erfindungsgemäßen Verfahrens wird zunächst eine eutektische Schmelze aus Kaliumchlorid und Lithiumchlorid bereitet. Die Temperatur der eutektischen Salzschmelze liegt beispielsweise bei etwa 360 bis 650°C.

Die Schmelze wird einer Elektrolyse unterworfen, wobei an der Anode (die beispielsweise aus Graphit bestehen kann) Chlorgas erzeugt wird. Dieser Schritt ist unter der Bezifferung 1) in der Figur 1 dargestellt. Die Temperatur an der Anode liegt bevorzugt im Bereich von etwa 400°C.

An der Kathode wird elementarer Wasserstoff eingeleitet, der dort mit dem elektrolytisch entstehenden Metall Lithium zu Lithiumhydrid reagiert. Dieser Schritt ist unter der Bezifferung 2) in Figur 1 dargestellt. Die Temperatur an der Kathode (bei der es sich beispielsweise um eine Tantal-Kathode handeln kann) liegt im Bereich von 550 bis 650°C, bevorzugt in der Größenordnung von etwa 600°C.

Das in der Salzschmelze gelöste Lithiumhydrid wird in der Salzschmelze bevorzugt bei einer Temperatur in der Größenordnung von etwa 400°C mit Siliziumtetrachlorid umgesetzt. Es bilden sich wasserstoffhaltige Silane, insbesondere $SiH_4$ neben $Si_2H_6$ und $H_2$, sowie Lithiumchlorid, das erneut der Elektrolyse unterworfen wird. Dieser Reaktionsschritt ist unter der Bezifferung 3) in der Figur 1 dargestellt.

Das wasserstoffhaltige Silangemisch wird abgezogen und unmittelbar anschließend mit Sauerstoff zu synthetischem Quarzglas verbrannt. Dieser Schritt ist unter der Bezifferung 4) in der Figur 1 dargestellt. Bei der Verbrennung entsteht als Nebenprodukt lediglich Wasser.

Das an der Anode gebildete Chlorgas wird direkt einem geheizten Reaktor mit einem Temperaturgradienten von 100 bis 800°C zugeführt, in dem es mit elementarem Silizium in üblicher Weise zu Siliziumtetrachlorid umgesetzt wird, das quantitativ zur Silanherstellung verbraucht wird. Dieser Reaktionsschritt ist unter der Bezifferung 5) in der Figur 1 dargestellt.

Aus der Summierung der beim erfindungsgemäßen Verfahren ablaufenden Reaktionen ist, wie in Figur 1 dargestellt, ersichtlich, daß beim erfindungsgemäßen Verfahren als Ausgangsmaterialien lediglich ungefährliches elementares Silizium, Wasserstoff und Sauerstoff benötigt werden, und daß als Reaktionsprodukte nur Siliziumdioxid und Wasser gebildet werden.

Gemäß einer bevorzugten Ausführungsform des erfindungsgemäßen Verfahrens wird auch die Herstellung des Wasserstoffs in das kombinierte Verfahren miteinbezogen. Diese erfolgt durch Elektrolyse von Wasser in derartigen Mengen, wie sie zur unmittelbaren Weiterverarbeitung des Wasserstoffs benötigt werden. Der dabei erzielte Sauerstoff reicht stöchiometrisch nicht zur Verbrennung der anfallenden Silane aus; jedoch wird nur noch eine Teilmenge der stöchiometrisch erforderlichen Menge aus einer zusätzlichen Sauerstoffquelle (z.B. durch Absorptionsverfahren aus Luft oder zusätzliche Wasserelektrolyse) benötigt.

Beim erfindungsgemäßen Verfahren kann die Elektrolyse der eutektischen Schmelze aus Kaliumchlorid und Lithiumchlorid unter Einführung von Siliziumtetrachlorid in an sich bekannter Weise durchgeführt werden. Die Herstellung von Silan in einer Salzschmelze im Labormaßstab wurde von Sundermeyer und Glemser in Angew. Chemie, 70 (1958), Seite 625, beschrieben. Sundermeyer und Litz beschreiben die elektrochemische Darstellung von Hydriden in geschmolzenen Salzen auch in Chemie-Ing.-Techn., 37 (1965), Seiten 14 bis 18. Bevorzugt wird die Salzschmelze in einem Dreikammer-Reaktor durchgeführt, der eine Anodenkammer, eine Kathodenkammer und eine der Kathodenkammer nachgeschaltete dritte Kammer aufweist, in der die Umsetzung des Lithiumhydrids mit dem Siliziumtetrachlorid erfolgt. Derartige Vorrichtungen können aus üblichen Materialien bestehen. Bevorzugt ist jedoch die Verwendung einer Apparatur aus Quarzglas, wobei weniger kritische Stellen aus Borsilikatglas oder Polytetrafluorethylen ausgebildet sein können.

Die Verbrennung des Silangemisches kann mit üblichen Brennern erfolgen, wobei auch hier bevorzugt ein Brenner aus Quarzglas eingesetzt wird. Der Brenner kann beispielsweise so ausgelegt sein, daß damit ein Posten in der Größenordnung bis zu 100 kg synthetisches Quarzglas erschmolzen werden kann.

Bei der Silan-Verbrennung anfallender Quarz-Ruß kann beispielsweise mit einer Ringabsaugung zusammen mit dem als Nebenprodukt entstehenden Wasserdampf in einem Wäscher abgeschieden werden.

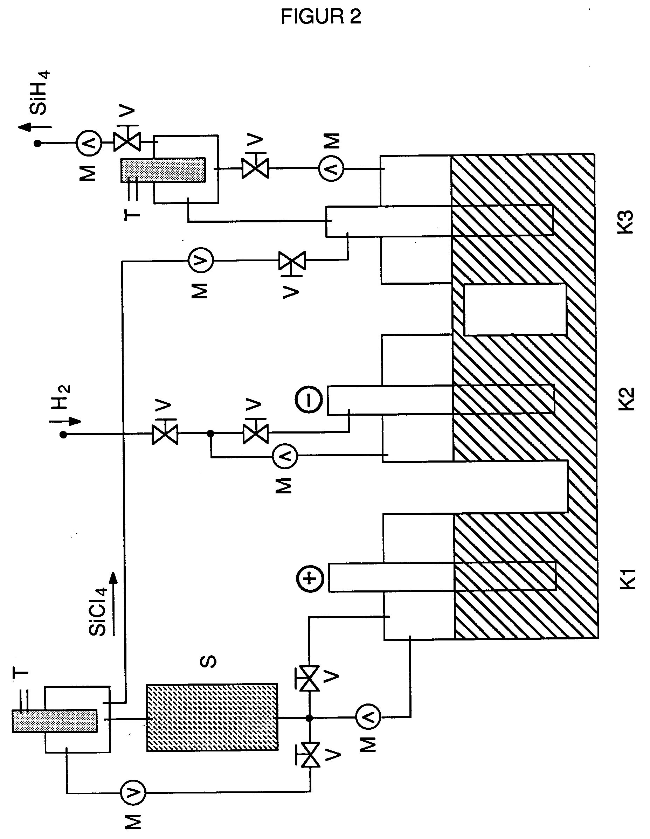

Ein Schema des erfindungsgemäß eingesetzten Dreikammer-Reaktors mit nachgeschaltetem SiliziumtetrachloridReaktor wird in der beigefügten **Figur 2** dargestellt. In der als Beispiel angegebenen Ausführungsform der Figur 2 stellen K1 die Anodenkammer, K2 die Kathodenkammer und K3 die nachgeschaltete Kammer zur Erzeugung von Silanen dar. In die Anodenkammer K1 taucht die Anode (+), die bevorzugt aus Graphit ausgebildet ist. Aus der Anodenkammer führen mit Regulierventilen (V) versehene Leitungen, gegebenenfalls über eine oder mehrere Membranpumpen (M), zum Siliziumtetrachlorid-Reaktor (S). In diesem Reaktor erfolgt die Umsetzung von elementarem Silizium mit dem aus der Anodenkammer abgezogenen Chlor unter Bildung von Siliziumtetrachlorid. Dieses kann gegebenenfalls einer Rektifikation unterworfen werden, um nicht umgesetztes Chlor zurückzuführen. In der in Figur 2 dargestellten Ausführungsform ist eine Tieftemperatur-Rektifikation (T) dargestellt. Das gegebenenfalls über die Tieftemperatur-Rektifikation (T) erhaltene Siliziumtetrachlorid wird über eine weitere Leitung mit Regulierventil (V) und Membranpumpe (M) in die Silankammer (K3) eingeleitet. Die Kathodenkammer ist mit einer oder mehreren Zuführleitungen für elementaren Wasserstoff, gegebenenfalls mit einem oder mehreren Regulierventilen (V) und einer Membranpumpe (M) versehen, um den Wasserstoff im Kreislauf zu führen.

Aus der Silankammer (K3) kann das dort gebildete Silan über Leitungen, die gegebenenfalls mit Membranpumpe (M) und Regulierventil (V) versehen sind, abgezogen werden. Es ist möglich, das hergestellte wasserstoffhaltige Silan bzw. Silangemisch vor der Verbrennung zu rektefizieren, um nicht umgesetztes Siliziumtetrachlorid zurückzuführen. In der Ausführungsform der Figur 2 wird eine Tieftemperatur-Rektifikation (T) dargestellt, aus der das Silan bzw. Gemisch über eine Leitung, gegebenenfalls versehen mit Regulierventil (V) und Membranpumpe (M), abgezogen werden kann.

Beim erfindungsgemäßen Verfahren wird das in der Salzschmelze gebildete Silan bzw. Silangemisch, das Wasserstoff enthalten kann, mit elementarem Sauerstoff zu synthetischem Quarzglas in Form von "Posten" verbrannt. Derartige Posten können größenordnungmäßig bis zu 100 kg betragen. Die Verbrennung erfolgt in einem Silan/Sauerstoff-Brenner. Dabei ist es beispielsweise möglich, das Silan/Sauerstoff-Gemisch mittels eines Brenners am oberen Ende eines Ofens zu verbrennen, der kammerförmig ausgebildet ist und an seinem unteren Ende einen Dreh-Hub-Teller aufweist, auf dem sich der synthetische Quarzglas-Posten abscheidet. Die Postenherstellung erfolgt in üblicher Weise. Während der Quarzherstellung dreht sich der Teller; mit dem Wachstum des Postens senkt er sich gleichzeitig ab. Der bei der Verbrennung entstehende Wasserdampf, sowie bei der Verbrennung entstehender Quarz-Ruß können zwischen der Einführungsstelle des Silan/Sauerstoff-Brenners und dem gebildeten Posten abgesaugt werden, beispielsweise durch eine Ring-Absaugleitung. Das erhaltene abgesaugte Gemisch kann beispielsweise über einen Wasser-Wäscher abgesaugt werden, in dem sich der Quarz-Ruß abscheidet. Bevorzugt wird der Wäscher mit entionisiertem Wasser gefüllt, um eine Kontaminierung des Quarz-Rußes zu vermeiden. Bei diesem handelt es sich ebenfalls um synthetisches Quarzglas hoher Reinheit. Nach dem Entfernen aus dem Wäscher, beispielsweise durch Dekantieren, kann der Quarz-Ruß getrocknet und beispielsweise bei hohen Temperaturen unter einem Schutzgas geschmolzen werden. Schmelztemperaturen liegen in der Grössenordnung von etwa 2500°C.

Der bei der Verbrennung erhaltene synthetische Quarzglas-Posten wird in üblicher Weise abgekühlt (getempert), beispielsweise in einem Posten-Kühlofen.

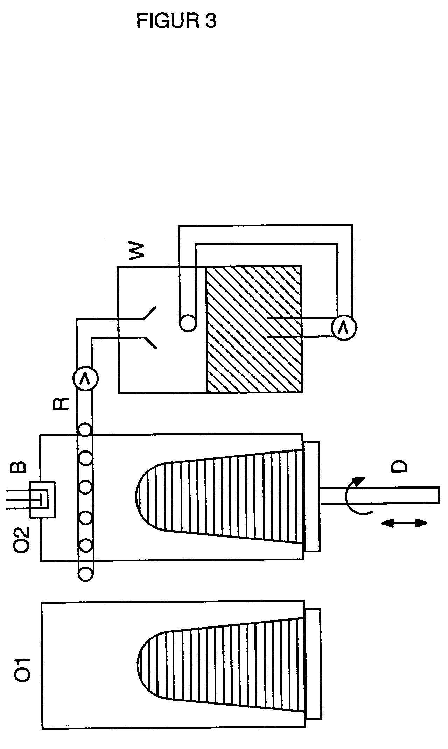

In der beigefügten Figur 3 ist das Schema der erfindungsgemäßen Posten-Herstellung dargestellt. In der Figur 3 stellt B den Silan/Sauerstoff-Brenner dar. D zeigt einen Dreh-/Hub-Teller. Der Brenner B ist von oben her in den Posten-Ofen (02) eingeführt. Eine Ringabsaugung (R) dient zur Absaugung von Wasserdampf und Quarz-Ruß und führt in den Wäscher (W), der beispielsweise mit entionisiertem Wasser gefüllt ist. 01 in der Figur 3 stellt einen Posten-Kühlofen dar.

Durch die erfindungsgemäße Verfahrensweise wird es möglich, Quarzglas höchster Reinheit herzustellen, da keinerlei flüchtige Metallhalogenide in den Prozeß eingeschleust werden. Das erfindungsgemäße Verfahren ist umweltfreundlich, da bei der Verbrennung des Silangemisches mit Sauerstoff nur Wasserdampf und Quarz-Ruß entstehen. Der Quarz-Ruß kann als Quarz-Sintergut für andere Zwecke verwendet werden, beispielsweise zu Faserherstellung.

Das erfindungsgemäße Verfahren ist bezüglich gewerbeaufsichlicher Anforderungen risikolos, da für das Verfahren nur Silizium, Wasser und Strom sowie geringe Sauerstoffmengen eingesetzt werden. Bei einem Störfall können nur geringste Mengen an Chlorgas emittiert werden, da nur soviel an Silanen erzeugt wird, wie gerade für die Verbrennung zu synthetischem Quarzglas benötigt wird.

Das eingesetzte Silizium stellt ein ungefährliches Material dar. Es ist nicht erforderlich, daß das Silizium hochgereinigt ist. Es genügt Silizium technischer Qualität. Derartiges Material kann beispielsweise Eisen und gegebenenfalls Calciumoxid enthalten. Seine Reinheit liegt bei beispielsweise etwa 98,5 bis 99,5 %. Verunreinigungen, wie Eisen und Calciumoxid, stören nicht, da die entsprechenden Chloride, die beim Verfahren gebildet werden können, nicht flüchtig sind.

Rektifikationsschritte sind beim erfindungsgemäßen Verfahren nicht notwendig, obwohl sie durchgeführt werden können. So ist es beispielsweise möglich, das Siliziumtetrachlorid sowie das gebildete Silan bzw. Silangemisch, das gegebenenfalls wasserstoffhaltig ist, einer Rektifikation zu unterziehen, beispielsweise einer Tieftemperatur-Rektifikation. Die Rektifikation kann nach üblichen Verfahren erfolgen. Im Gegensatz zu bisher bekannten Verfahren ist es nicht notwendig, hochgereinigtes Silan einzusetzen; Gemische von wasserstoffhaltigen Silanen sind beim erfindungsgemäßen Verfahren unschädlich.

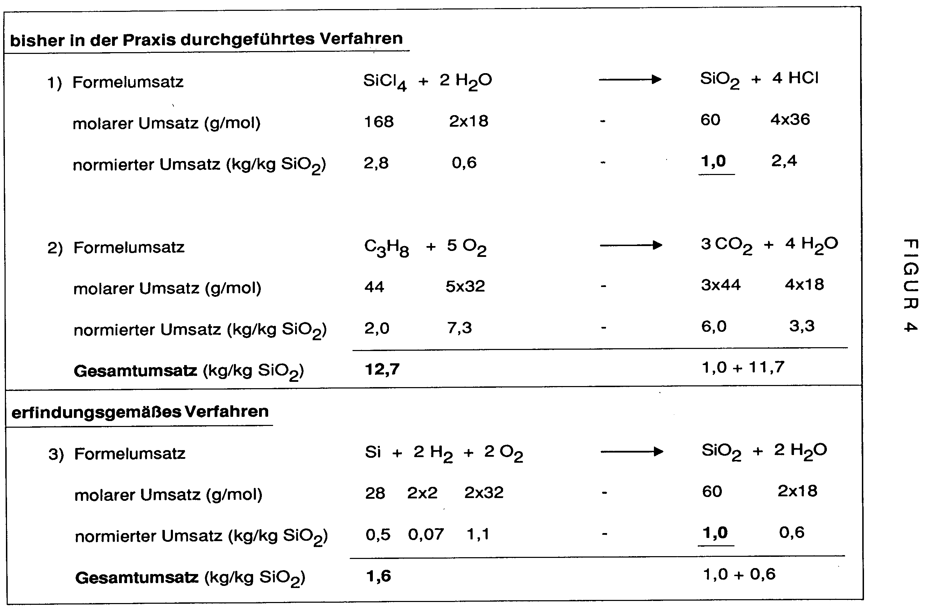

Nachstehend werden anhand eines Beispieles die Umweltfreundlichkeit und die Wirtschaftlichkeit des erfindungsgemäßen Verfahrens im Vergleich mit dem bisher allein in der Praxis durchgeführten Verfahren der Hydrolyse von Siliziumtetrachlorid dargestellt. Dabei wird auf die beigefügte **Figur 4** Bezug genommen, in der die Formelschemata beider Verfahren und die Umsätze dargestellt werden.

Beim bisherigen Verfahren werden für die Herstellung von 1 kg Propan und 7,3 kg Sauerstoff als Ausgangsprodukt benötigt. Als Abfallprodukte entstehen pro kg synthetisches Quarzglas 2,4 kg Chlorwasserstoffgas und als Verbrennungsgase 6 kg Kohlendioxid und 3,3 kg Wasser. Es ist daher mit toxischen Abgasen zu rechnen.

Beim erfindungsgemäßen Verfahren werden hingegen nur 0,5 kg Silizium, 0,07 kg Wasserstoff, 1,1 kg Sauerstoff und elektrischer Strom zur Erzeugung von 1 kg synthetischem Quarzglas benötigt. Als "Abfallprodukt" fallen allein nur 0,6 kg Wasser an.

Das erfindungsgemäße Verfahren wird so durchgeführt, daß gerade soviel an Silan erzeugt wird, wie für den Verbrennungsprozeß benötigt wird. Durch eine geeignete Dimensionierung des Dreikammer-Reaktors kann gewährleistet werden, daß bei einem eventuellen Störfall (Glasbruch) nur geringfügige Mengen an Chlorgas emittiert werden können. Daher ist das erfindungsgemäße Verfahren auch unter Gesichtspunkten der gewerblichen Vorschriften innovativ, während beim Stand der Technik vielfältige Vorkehrungen zu treffen waren. So ist Siliziumtetrachlorid eine Chemikalie, die der Gefahrstoffverordnung unterliegt und für die Lagerung von Propan und verdichtetem Sauerstoff sind besondere Vorsichtsmaßnahmen zu treffen. Alle derartigen Vorkehrungen entfallen für das erfindungsgemäße Verfahren, da nur die Bevorratung von elementarem Silizium, einem völlig ungefährlichen Stoff, erforderlich ist. In Gegenden mit guter Sonneneinstrahlung bietet sich für das erfindungsgemäße Verfahren darüberhinaus die Photovaltik an, ein zusätzlicher Aspekt zur Umweltfreundlichkeit des Verfahrens.

Während beim bisherigen Verfahren zur Herstellung von 1 kg synthetischem Quarzglas 12,1 kg Ausgangsmaterialien herbeigeschafft und gelagert werden mußten und 11,1 kg Abfall weggeschafft werden mußten, teilweise durch Gefahrguttransporte, benötigt das erfindungsgemäße Verfahren lediglich 0,6 kg ungefährliches Ausgangsmaterial, was eine weitere Entlastung der Umwelt durch geringeres Transportaufkommen (Energieeinsparung und die damit verbundene Verringerung an Emissionen) bedingt.

**Patentansprüche**

1.  Verfahren zur Herstellung von hochreinem Quarzglas durch Verbrennung eines Silan/Sauerstoffgemisches,
    **dadurch gekennzeichnet,** daß
    a) eine eutektische Schmelze aus Kaliumchlorid und Lithiumchlorid elektrolysiert wird, wobei an der Kathode Wasserstoff eingeleitet,
    b) das dabei an der Kathode gebildete Lithiumhydrid in der Schmelze mit Siliziumtetrachlorid umgesetzt,
    c) das dabei entstehende Silan abgezogen und unmittelbar anschließend mit Sauerstoff vermischt und verbrannt wird, wobei
    d) das in der Stufe a) an der Anode gebildete Chlorgas abgezogen und unmittelbar anschließend mit elementarem Silizium zu Siliziumtetrachlorid umgesetzt wird, das in die Stufe b) zur Umsetzung mit dem Lithiumhydrid eingeführt wird.

2.  Verfahren nach Anspruch 1, dadurch gekennzeichnet, daß der in der Stufe a) benötigte Wasserstoff durch Elektrolyse von Wasser erzeugt und der dabei entstehende Sauerstoff als Teil des zur Verbrennung in der Stufe c) benötigten Sauerstoffs verwendet wird.

3.  Verfahren nach Anspruch 1, dadurch gekennzeichnet, daß Chlorgas und Siliziumtetrachlorid nur in solchen Mengen erzeugt werden, die zur unmittelbaren Weiterverarbeitung benötigt werden.

4.  Verfahren nach Anspruch 2, dadurch gekennzeichnet, daß Chlorgas, Siliziumtetrachlorid und Wasserstoff nur in solchen Mengen erzeugt werden, die zur unmittelbaren Weiterverarbeitung benötigt werden.

5.  Verfahren nach einem der vorhergehenden Ansprüche, dadurch gekennzeichnet, daß die Elektrolyse in einem Schmelzofen mit Anodenkammer, Kathodenkammer und letzterer nebengeschalteter Kammer zur Einführung von Siliziumtetrachlorid durchgeführt wird, und das in der Anodenkammer gebildete Chlor einem unmittelbar nachgeschalteten Reaktor zur Herstellung von Siliziumtetrachlorid zugeführt wird.

1)  4 LiCl $\longrightarrow$ 4 Li + 2 Cl$_2$

2)  4 Li + 2 H$_2$ $\longrightarrow$ 4 LiH

3)  4 LiH + SiCl$_4$ $\longrightarrow$ SiH$_4$ + 4 LiCl

4)  SiH$_4$ + 2 O$_2$ $\longrightarrow$ SiO$_2$ + 2 H$_2$O

5)  Si + 2 Cl$_2$ $\longrightarrow$ SiCl$_4$

6)  Si + 2 H$_2$ + 2 O$_2$ $\longrightarrow$ SiO$_2$ + 2 H$_2$O

FIGUR 1

# FIGUR 2

FIGUR 3

**bisher in der Praxis durchgeführtes Verfahren**

1) Formelumsatz $\quad$ $SiCl_4 + 2\,H_2O \longrightarrow SiO_2 + 4\,HCl$

  molarer Umsatz (g/mol)   168   2x18   -   60   4x36

  normierter Umsatz (kg/kg $SiO_2$)   2,8   0,6   -   **1,0**   2,4

2) Formelumsatz $\quad$ $C_3H_8 + 5\,O_2 \longrightarrow 3\,CO_2 + 4\,H_2O$

  molarer Umsatz (g/mol)   44   5x32   -   3x44   4x18

  normierter Umsatz (kg/kg $SiO_2$)   2,0   7,3   -   6,0   3,3

  **Gesamtumsatz** (kg/kg $SiO_2$)   **12,7**    1,0 + 11,7

**erfindungsgemäßes Verfahren**

3) Formelumsatz $\quad$ $Si + 2\,H_2 + 2\,O_2 \longrightarrow SiO_2 + 2\,H_2O$

  molarer Umsatz (g/mol)   28   2x2   2x32   -   60   2x18

  normierter Umsatz (kg/kg $SiO_2$)   0,5   0,07   1,1   -   **1,0**   0,6

  **Gesamtumsatz** (kg/kg $SiO_2$)   **1,6**    1,0 + 0,6

**FIGUR 4**

Europäisches
Patentamt

**EUROPÄISCHER RECHERCHENBERICHT**

Nummer der Anmeldung

EP    92 10 0633

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 835 208 (W. HEITMANN) <br> * das ganze Dokument * | 1 | C03C3/06 <br> C01B33/04 |
| A | | 2-5 | |
| | --- | | |
| Y | SOLID STATE TECHNOLOGY. <br> Bd. 30, Nr. 7, Juli 1987, WASHINGTON US <br> Seiten 53 - 59; <br> P.A. TAYLOR: 'Silane: manufacture and applications' <br> * Seite 54, Absatz 1-3 * | 1 | |
| | --- | | |
| A | US-A-3 078 218 (W. SUNDERMEYER) <br> * Anspruch 1; Abbildung 3 * | 1-5 | |
| | --- | | |
| A | CHEMICAL ABSTRACTS, vol. 103, no. 14, <br> Oktober 1985, Columbus, Ohio, US; <br> abstract no. 109043N, <br> Seite 269 ; Spalte 1 ; <br> * Zusammenfassung * <br> & JP-A-6 090 836 (SHIN-ETSU CHEMICAL INDUSTRY CO. LTD.) 22. Mai 1985 | 1-5 | |
| | ----- | | **RECHERCHIERTE SACHGEBIETE (Int. Cl.5)** <br><br> C03C <br> C01B <br> C03B |

Der vorliegende Recherchenbericht wurde für alle Patentansprüche erstellt

| Recherchenort | Abschlußdatum der Recherche | Prüfer |
|---|---|---|
| DEN HAAG | 21 APRIL 1992 | REEDIJK A.M.E. |